# EUROPEAN PATENT APPLICATION

(11) **EP 1 609 713 A2**
(43) Date of publication of application: **28.12.2005**
(21) Application number: 05004573.1
(22) Date of filing: 02.03.2005
(51) Int. Cl.: B62M 9/06

(54) **Shift assist projection for bicycle sprocket**

(30) Priority: 22.06.2004 US 872786
(71) Applicant: SHIMANO INC., Osaka 590-8577 (JP)
(72) Inventor: Emura, Atsuhiro, Sakai Osaka 599-8273 (JP); Nishimoto, Yusuke, Sakai Osaka 590-0111 (JP); Tetsuka, Toshio, Sakai Osaka (JP)
(74) Representative: Grosse, Wolfgang

(57) **Abstract**

A shift assist projection 20 is provided on a large bicycle sprocket S₂ to assist in shifting a chain C to the sprocket S₂ from an adjacent smaller sprocket S₁. The shift assist projection 20 extends axially from one side of the sprocket S₂. The shift assist projection 20 has an axially facing chain catching surface 74 that faces the center plane P and the teeth 54 of the large sprocket S₂ to engage an outer link plate of the chain C. The chain catching surface 74 is preferably angled a varying amount relative to the center plane of the large sprocket S₂. The chain catching surface 74 preferably has a rearward most rotational edge that is located closer to the center plane P than a forward most rotational edge as viewed substantially along a moving direction of the chain C when the chain is being shifted from the smaller sprocket S₁ to the large sprocket S₂.

## Description

### BACKGROUND OF THE INVENTION

### Field of the Invention

This invention generally relates to a shift assist projection for a bicycle sprocket. More specifically, the present invention relates to sprocket assembly with one or more shift assist projections formed on a relatively larger sprocket to aid in shifting the bicycle chain from a relatively smaller sprocket to the larger sprocket. Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. In particular, various components of the bicycle drive train have been extensively redesigned in recent years to improve shifting performance and reliability.

The drive train typically includes one or more front sprockets coupled to front crank arms, one or more rear sprockets coupled to the rear wheel via a free wheel and a drive chain to propel the bicycle. Front and rear derailleurs are arranged to force or shift the chain laterally between the various front and rear sprockets, respectively. In a conventional sprocket assembly, when the chain is shifted from a smaller sprocket to a larger sprocket, a side surface of the chain contacts a side surface of the large sprocket and the chain is supported by the large sprocket through a frictional force produced by this contact. With rotation of the large sprocket, the chain is raised radially outwardly to engage teeth of the sprocket.

Shifting of the chain in this manner requires a sufficient frictional force produced between the chain and the large sprocket to pick up the chain reliably with rotation of the sprocket. In other words, the derailleur must exert a strong force to press the chain upon the large sprocket. When a heavy drive load occurs during a shifting operation, the chain may slip from the large sprocket. This makes it very difficult to pick up the chain with the large sprocket, or results in a delay of chain shift.

In order to overcome this problem, a sprocket assembly with projections that aid in the shifting of the bicycle chain has been developed as disclosed in U.S. Patent No. 5,413,534 to Nagano. While this sprocket assembly operates very well in shifting the chain from a smaller sprocket to a larger sprocket, the projections on the larger sprocket sometimes causes a slight obstruction during the shifting. In other words, this obstruction caused by the projections can make the gear-changing operation unsteady and produce an unsatisfactory sensation to the rider.

In order to overcome this problem, a sprocket assembly with modified projections that aid in the shifting of the bicycle chain has been developed as disclosed in U.S. Patent No. 6,572,500 to Tetsuka. While this sprocket assembly operates very well in shifting the chain from a smaller sprocket to a larger sprocket, this assembly has some drawbacks. For example, the projections on the larger sprocket of this assembly do not always shift the chain as aggressively or as rapidly as desired by some riders. Thus, it is possible that power might not be as efficiently transferred to the chain during a shifting operation from the smaller sprocket to the larger sprocket as desired by some riders. Also, with this sprocket assembly, the gear-changing operation is not always as steady as desired by some riders. In other words, with this sprocket assembly an unsatisfactory sensation might still be felt by some riders.

In view of the above, it will be apparent to those skilled in the art from this disclosure that there exists a need for an improved sprocket with a shift assist projection. This invention addresses this need in the art as well as other needs, which will become apparent to those skilled in the art from this disclosure.

### SUMMARY OF THE INVENTION

One object of the present invention is to provide a sprocket assembly having a large sprocket with a shift assist projection and a small sprocket.

Another object of the present invention is to provide a shift assist projection for a large sprocket that facilitates a smooth shifting action between a smaller sprocket to a larger sprocket.

Another object of the present invention is to provide a shift assist projection for a large sprocket that facilitates shifting a chain from a smaller sprocket to a larger sprocket relatively easily and reliably even under a heavy drive load.

Still another object of the present invention is to provide a shift assist projection for a large sprocket that facilitates an aggressive, rapid shift of a chain from a smaller sprocket to a larger sprocket.

Yet still another object of the present invention is to provide a sprocket assembly that includes a large sprocket with a shift assist projection, which is relatively simple and inexpensive to manufacture and assemble.

The foregoing objects can basically be attained by providing a shift assist projection for a bicycle sprocket that comprises a mounting portion and a shift assist portion. The mounting portion is configured and arranged to be fixedly coupled to a bicycle sprocket that has a plurality of chain engagement teeth, a center plane and a center rotation axis perpendicular to the center plane. The shift assist portion is configured to be axially spaced from the center plane of the bicycle sprocket when the mounting portion is fixedly coupled to the bicycle sprocket. The shift assist portion has an axially facing chain catching surface that faces the center plane and the teeth to engage an outer link plate of a bicycle chain when the mounting portion is fixedly coupled to the bicycle sprocket. The chain catching surface is angled a varying amount relative to the center plane of the bicycle sprocket when the mounting portion is fixedly coupled to the bicycle sprocket.

The foregoing objects can basically be attained by providing a shift assist projection for a bicycle sprocket that comprises a mounting portion and a shift assist portion. The mounting portion is configured and arranged to be fixedly coupled to a bicycle sprocket that has a plurality of chain engagement teeth, a center plane and a center rotation axis perpendicular to the center plane. The shift assist portion is configured to be axially spaced from the center plane of the bicycle sprocket when the mounting portion is fixedly coupled to the bicycle sprocket. The shift assist portion has an axially facing chain catching surface that faces the center plane and the teeth to engage an outer link plate of a bicycle chain when the mounting portion is fixedly coupled to the bicycle sprocket. The chain catching surface is angled a varying amount relative to the center plane of the bicycle sprocket when the mounting portion is fixedly coupled to the bicycle sprocket. The chain catching surface has a rearward most rotational edge that is located closer to the center plane than a forward most rotational edge as viewed substantially along a chain moving direction of the chain when the chain is being shifted from a smaller sprocket to the sprocket with the shift assist projection coupled thereto.

The foregoing objects can also basically be attained by providing a large bicycle sprocket that comprises an annular ring portion, a plurality of circumferentially spaced teeth and a shift assist projection. The annular ring portion is configured to be coupled to a bicycle drive train element. The annular ring portion has a first annular side surface facing in a first direction, a second annular side surface facing in a second direction substantially opposite to the first direction and a center plane arranged between the first and second annular side surfaces. The circumferentially arranged teeth extend radially outwardly from the annular ring portion between the first and second annular side surfaces of the annular ring portion. The shift assist projection extends axially in one of the first and second directions from the sprocket. The shift assist projection has an axially facing chain catching surface that faces the center plane and the teeth to engage an outer link plate of a bicycle chain. The chain catching surface is angled a varying amount relative to the center plane.

The foregoing objects can also basically be attained by providing a large bicycle sprocket that comprises an annular ring portion, a plurality of circumferentially spaced teeth and a shift assist projection. The annular ring portion is configured to be coupled to a bicycle drive train element. The annular ring portion has a first annular side surface facing in a first direction, a second annular side surface facing in a second direction substantially opposite to the first direction and a center plane arranged between the first and second annular side surfaces. The circumferentially arranged teeth extend radially outwardly from the annular ring portion between the first and second annular side surfaces of the annular ring portion. The shift assist projection extends axially in one of the first and second directions from the sprocket. The shift assist projection has an axially facing chain catching surface that faces the center plane and the teeth to engage an outer link plate of a bicycle chain. The chain catching surface is angled a varying amount relative to the center plane. The chain catching surface has a rearward most rotational edge that is located closer to the center plane than a forward most rotational edge as viewed substantially along a chain moving direction of the chain when the chain is being shifted from a smaller sprocket to the large sprocket.

The foregoing objects can also basically be attained by providing a bicycle sprocket assembly that comprises a first sprocket and a second sprocket coupled to the first sprocket. The first sprocket has a plurality of circumferentially spaced first teeth extending radially outwardly from a first annular ring portion. The second sprocket is larger than the first sprocket, and includes a second annular ring portion, a plurality of circumferentially arranged second teeth and a shift assist projection. The second annular ring portion has a first annular side surface facing in a first direction toward the first sprocket, a second annular side surface facing in a second direction substantially opposite to the first direction and a center plane arranged between the first and second annular side surfaces. The circumferentially arranged second teeth extend radially outwardly from the second annular ring portion between the first and second annular side surfaces of the second annular ring portion. The shift assist projection extends axially from the second sprocket toward the first sprocket. The shift assist projection has an axially facing chain catching surface that faces the center plane and the second teeth to engage an outer link plate of a bicycle chain. The chain catching surface is angled a varying amount relative to the center plane.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a side elevational view of a bicycle drive train having a front sprocket assembly in accordance with a first preferred embodiment of the present invention.
Figure 2 is an enlarged, outside elevational view of the front sprocket assembly illustrated in Figure 1;
Figure 3 is an inside elevational view of the sprocket assembly illustrated in Figure 2;
Figure 4 is further enlarged, top plan view of the sprocket assembly illustrated in Figures 2 and 3, with the drive chain arranged on the smaller sprocket during a first (initial) stage of a shifting operation to the larger sprocket;
Figure 5 is further enlarged, top plan view of the sprocket assembly illustrated in Figures 2 and 3, with the drive chain arranged on the smaller sprocket during a second stage of a shifting operation to the larger sprocket;
Figure 6 is further enlarged, top plan view of the sprocket assembly illustrated in Figures 2 and 3, with the drive chain arranged on the smaller and larger sprockets during a third stage of a shifting operation to the larger sprocket;
Figure 7 is further enlarged, top plan view of the sprocket assembly illustrated in Figures 2 and 3, with the drive chain arranged on the smaller and larger sprockets during a fourth (final) stage of a shifting operation to the larger sprocket;
Figure 8 is a partial, inside elevational view of the sprocket assembly illustrated in Figure 4, with the drive chain arranged on the smaller sprocket during the first (initial) stage of the shifting operation to the larger sprocket;
Figure 9 is a partial, inside elevational view of the sprocket assembly illustrated in Figure 5, with the drive chain arranged on the smaller sprocket during the second stage of the shifting operation to the larger sprocket;
Figure 10 is a partial, inside elevational view of the sprocket assembly illustrated in Figure 6, with the drive chain arranged on the smaller and larger sprockets during the third stage of the shifting operation to the larger sprocket;
Figure 11 is a partial, inside elevational view of the sprocket assembly illustrated in Figure 7, with the drive chain arranged on the smaller and larger sprockets during the fourth (final) stage of the shifting operation to the larger sprocket;
Figure 12 is a further enlarged, partial top plan view of the large sprocket and the chain illustrated in Figures 4-11, with the shift assist projection shown in bold lines for the purpose of illustration;
Figure 13 is an inside elevational view of the portions of the large sprocket and chain illustrated in Figure 12, with a shift assist projection shown in bold lines for the purpose of illustration;
Figure 14 is a further enlarged, inside elevational view of a portion of the large sprocket (with one of the shift assist projections) illustrated in Figure 13;
Figure 15 is a partial, inside perspective view of the large sprocket illustrated in Figures 2-14;
Figure 16 is an enlarged, perspective view of one of the shift assist projections of the large sprocket illustrated in Figures 2-15;
Figure 17 is an outside elevational view of the shift assist projection illustrated in Figure 16;
Figure 18 is an upper elevational view of the shift assist projection illustrated in Figures 16 and 17;
Figure 19 is an end elevational of the shift assist projection illustrated in Figures 16-18, as viewed from the forward rotational side thereof;
Figure 20 is a cross-sectional view of the shift assist projection illustrated in Figures 16-19, as seen along section line 20-20 of Figure 17;
Figure 21 is an inside elevational view of the shift assist projection illustrated in Figures 16-20; and
Figure 22 is a side elevational view of a bicycle drive train in accordance with a second embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

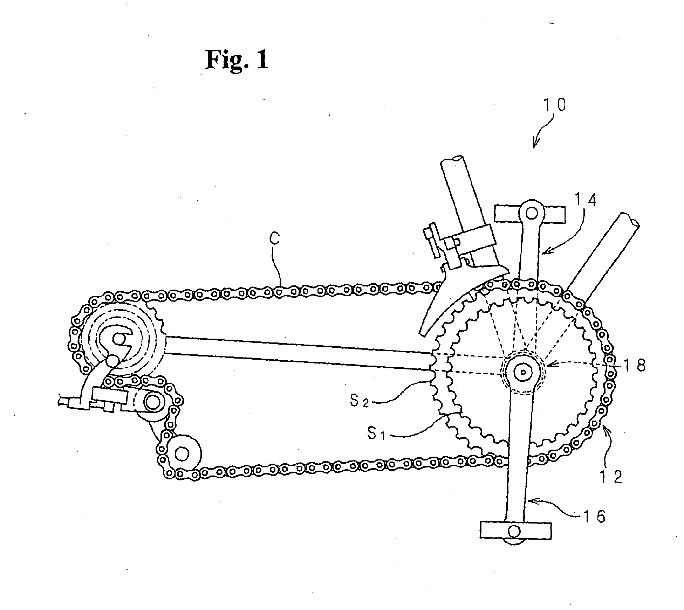

Referring initially to Figures 1-3, a bicycle drive train 10 is illustrated with a front crank set 12 in accordance with a preferred embodiment of the present invention. The front crank set 12 basically includes a left crank arm 14, a right crank arm 16, a bottom bracket 18, a (first) smaller diameter sprocket S₁ and a (second) larger diameter sprocket S₂. The large diameter sprocket S₂ preferably includes a plurality of shift assist projections 20 fixedly coupled thereto in accordance with the present invention in order to facilitate shifting of a drive chain C from the smaller sprocket S₁ to the larger sprocket S₂. The sprockets S₁ and S₂ form parts of a sprocket assembly in accordance with the present invention. Optionally, the right crank arm 16 can also be considered part of the sprocket assembly in accordance with the present invention.

The bicycle drive train 10 is conventional except for the sprocket assembly of the front crank set 12. Thus, the bicycle drive train 10 will not be discussed and/or illustrated in detail herein, except as related to the present invention. Rather, it will be apparent to those skilled in the art from this disclosure that the bicycle drive train 10 includes various conventional bicycle components such as wheels, shifters, derailleurs, etc. coupled to a frame in a conventional manner. Moreover, it will be apparent to those skilled in the art from this disclosure that various modifications can be made to the bicycle drive train 10 and its various components without departing from the present invention, as described and illustrated herein. Furthermore, it will be apparent to those skilled in the art from this disclosure that the sprocket assembly in accordance with the present invention can be utilized with more sprockets (e.g. three front sprockets) and/or in a different location on the bicycle 10 (e.g. on the rear sprocket assembly). Finally, it will be apparent to those skilled in the art from this disclosure that the bicycle drive train 10 can be used on various types of bicycle such as road or mountain bicycles as needed and/or desired.

Referring to Figure 1, the bottom bracket 18 includes a crank shaft or axle (not shown) freely rotatably mounted in a tubular part of the frame of the bicycle 10 for rotation about a rotation axis X in a conventional manner. The left crank arm 14 has one end fixedly coupled to the crank shaft (not shown) of the bottom bracket 18, while the other end has a pedal pivotally coupled thereto in a conventional manner. Similarly, the right crank arm has one end fixedly coupled to the crank shaft (not shown) of the bottom bracket 18, while the other end has a pedal pivotally coupled thereto in a conventional manner. The sprockets S₁ and S₂ are preferably non-movably, fixedly coupled to the right crank arm 16, as explained below in more detail. Thus, when the rider pedals to rotate the crank arms 14 and 16 about the rotation axis X, the drive chain C is cycled to propel a bicycle (only a portion shown). The left and right crank arms 14 and 16 are basically conventional, except the right crank arm 16 has the sprockets S₁ and S₂ coupled thereto, as explained below. Thus, the crank arms 14 and 16 will not be discussed and/or illustrated in detail herein except as related to the present invention.

The crank arm 16 basically includes a shaft attachment portion 30, a sprocket attachment portion 32 and a pedal attachment portion 34. The pedal attachment portion 34 is an elongated rod shaped member that extends radially outwardly from the shaft attachment portion 30 in a conventional manner. The shaft attachment portion 30 is configured to be fixedly coupled to the crank shaft (not shown) of the bottom bracket 18 in a conventional manner. The sprocket attachment portion 32 includes a plurality (five) of fastening elements or fingers 36 that extend radially outwardly from the shaft attachment portion 30. The sprockets S₁ and S₂ are preferably fixedly coupled to the inner and outer sides of the fastening elements 36 via fasteners 38 in a conventional manner. Preferably, the shaft attachment portion 30, the sprocket attachment portion 32 and the pedal attachment portion 34 are integrally formed together as a one-piece, unitary member from a lightweight, rigid material such as cast aluminum or the like in a conventional manner.

The (first) sprocket S₁ basically includes a first mounting portion 40, a first annular ring portion 42 and a plurality of circumferentially spaced first teeth 44 extending radially outwardly from the first annular ring portion 42. The first mounting portion 40 includes a plurality (five) of mounting flanges 46 that extend radially inwardly for coupling the flanges 46 to the fastening elements 36 via the fasteners 38 in a conventional manner. Preferably, the first mounting portion 40, the first annular ring portion 42 and the first teeth 44 are integrally formed together as a one-piece, unitary member from a lightweight, rigid material such as aluminum or the like in a conventional manner. The (first) sprocket S₁ is basically conventional.
Thus, the (first) sprocket S₁ will not be discussed and/or illustrated in detail herein, except as related to the present invention. In other words, it will be apparent to those skilled in the art from this disclosure that the first sprocket S₁ is a conventional sprocket that is sized and configured to be used adjacent the second sprocket S₂ of the present invention.

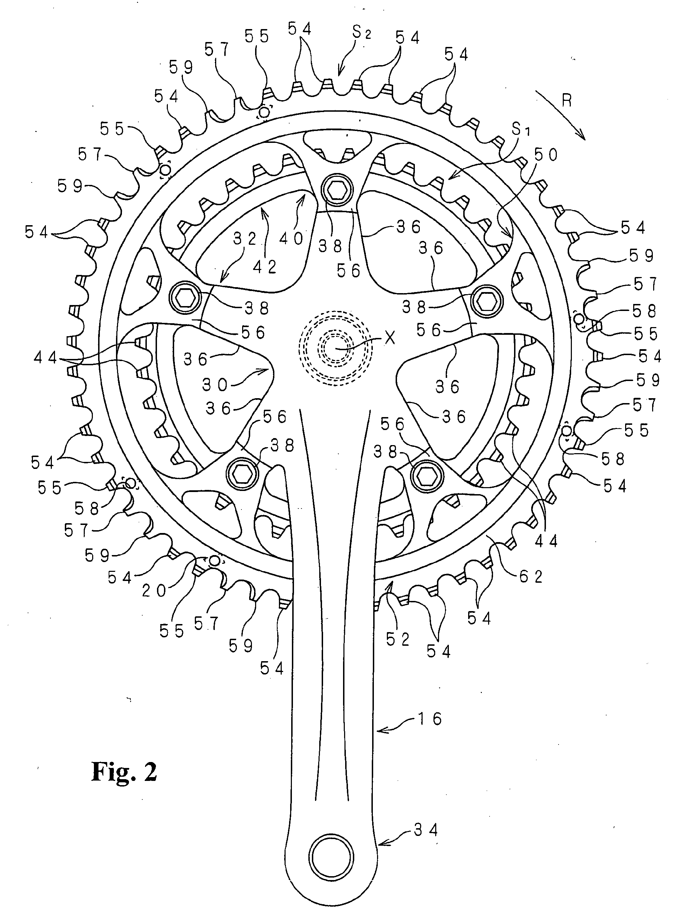

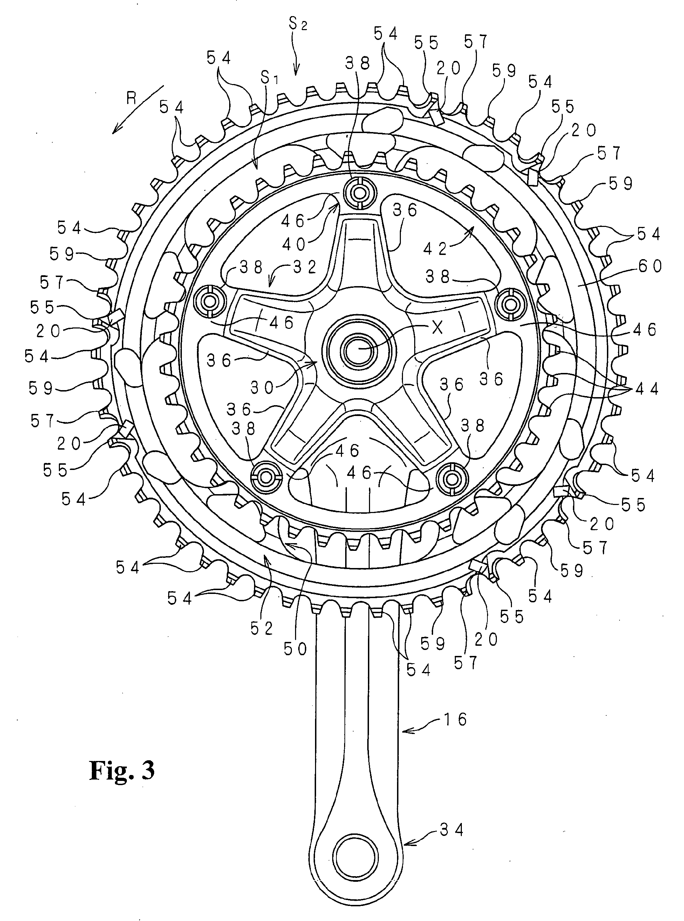

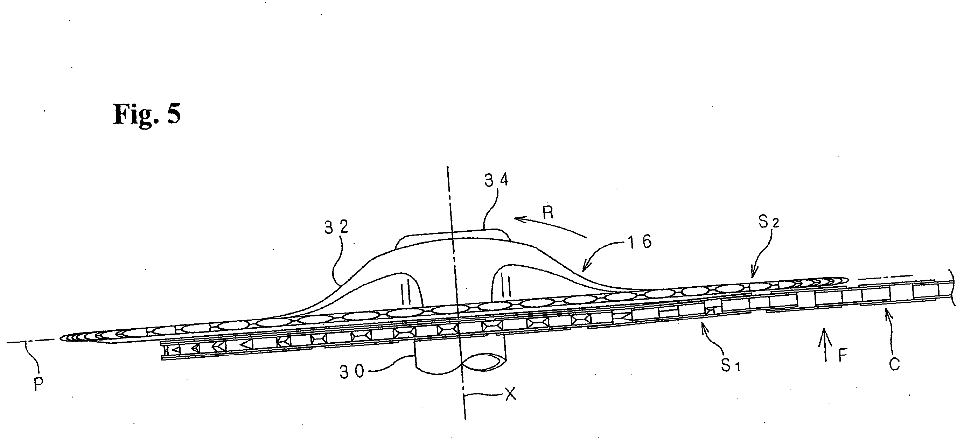

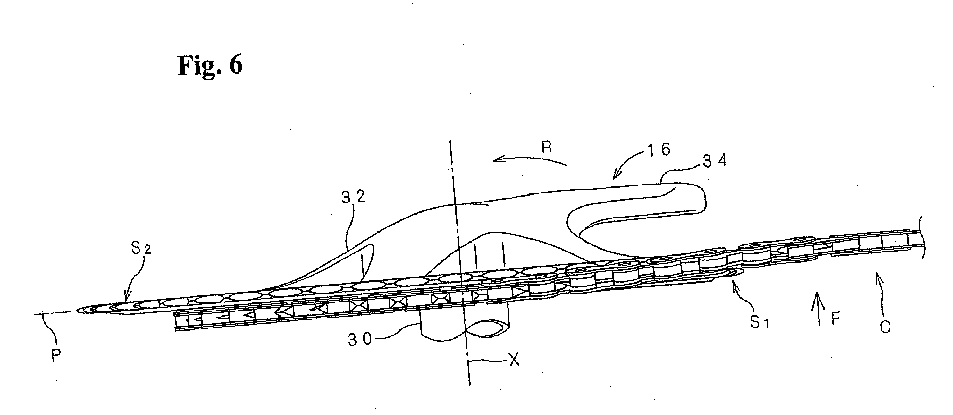

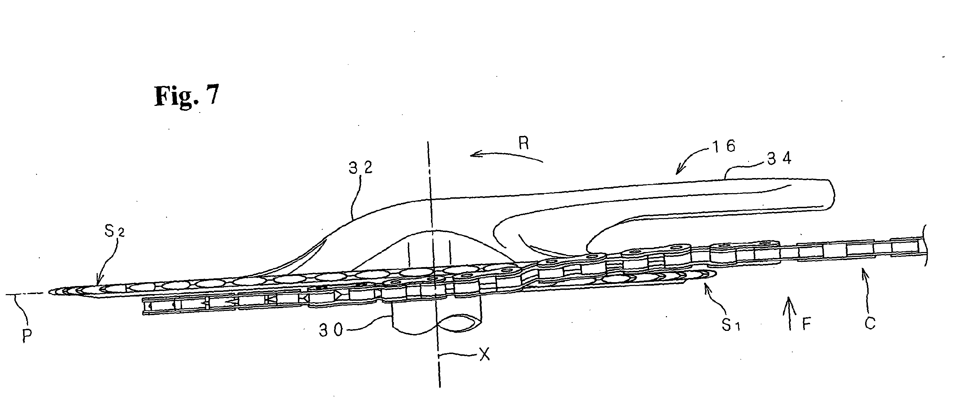

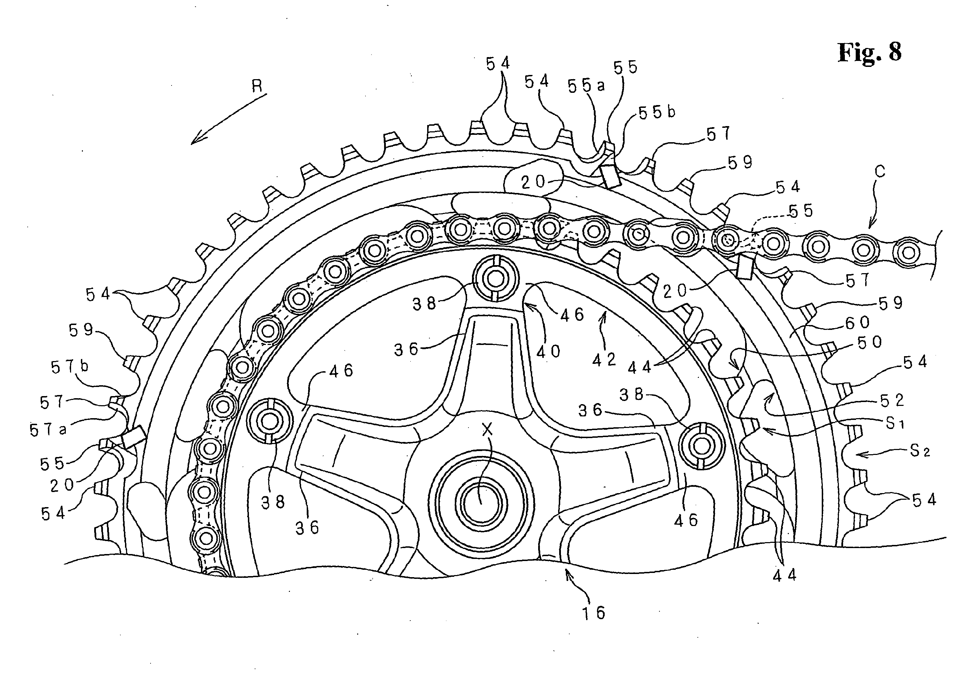

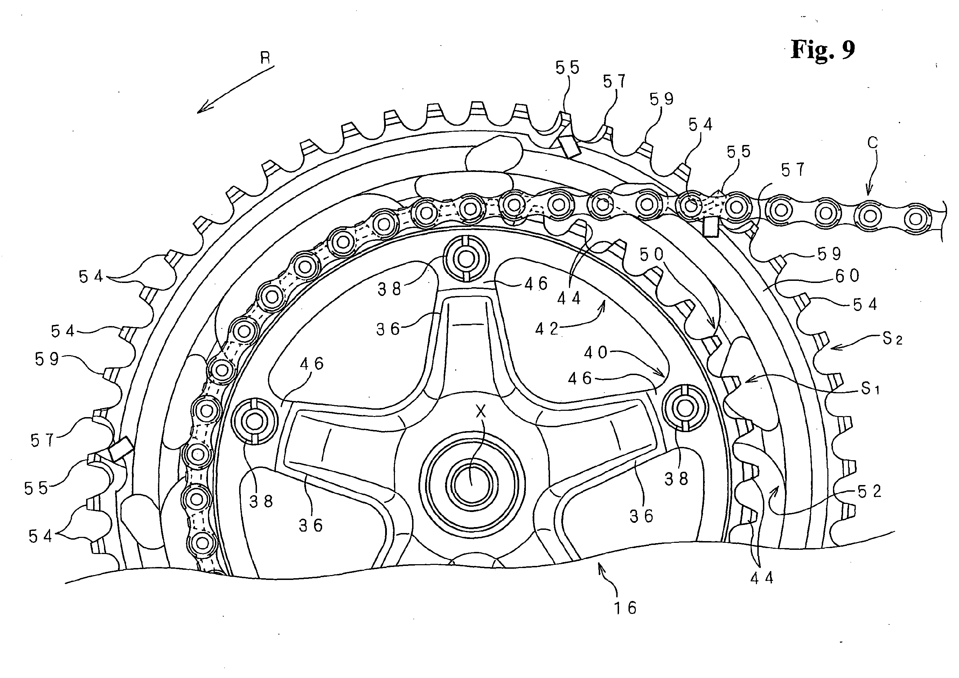

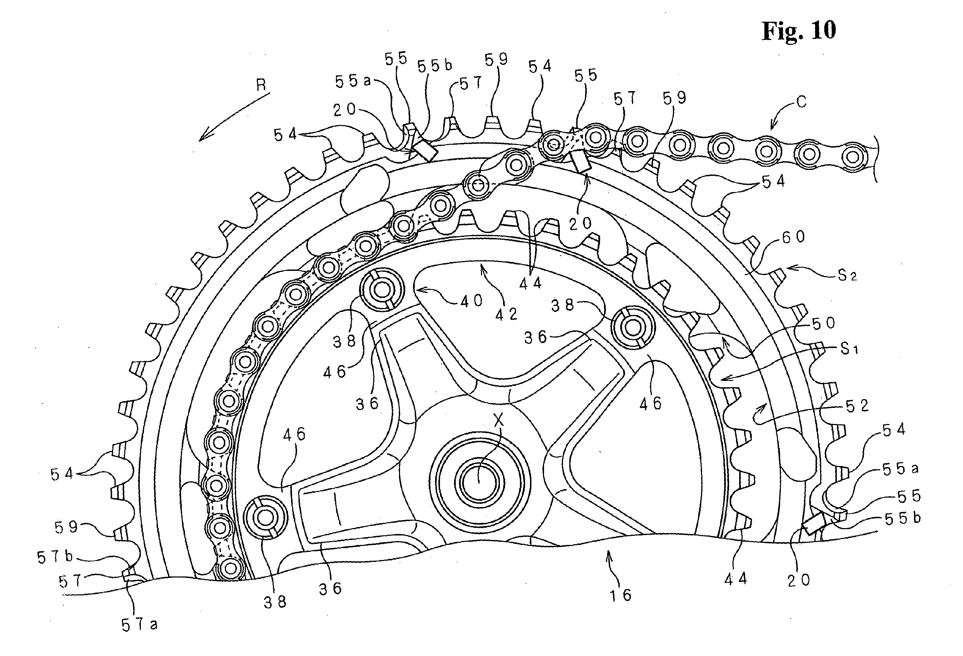

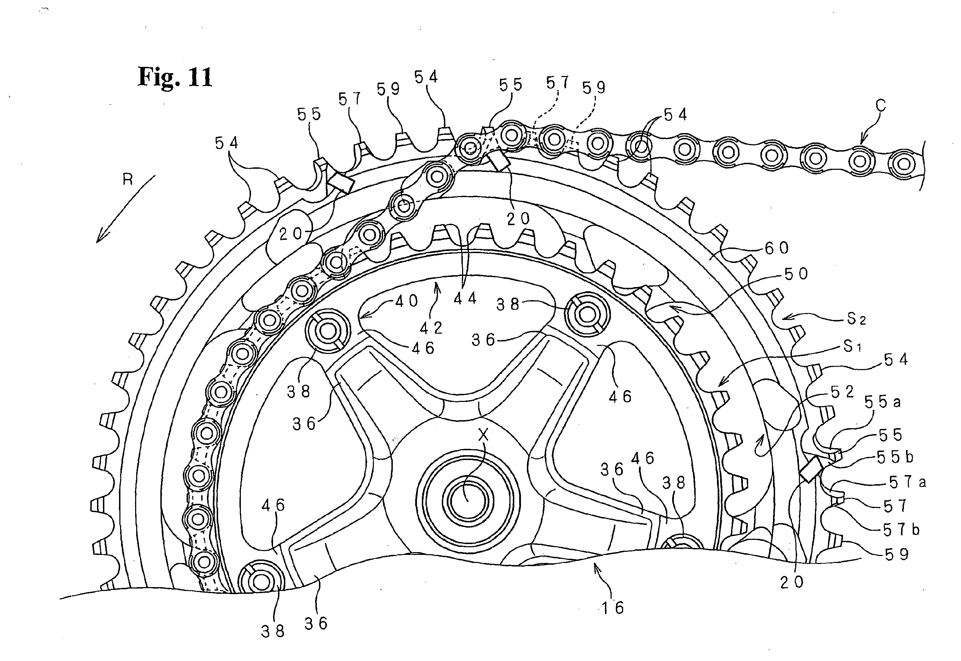

Referring to Figures 2-11, the (second) sprocket S₂ basically includes a second mounting portion 50, a second annular ring portion 52, a plurality of circumferentially spaced main teeth 54, a plurality (six) of first up shift teeth 55, a plurality (six) of second up shift teeth 57, a plurality (six) of third up shift teeth 59 and the plurality (six) of shift assist projections 20. The second sprocket S₂ is designed to facilitate aggressive, rapid, and yet smooth up shifts of the drive chain C from the first sprocket S₁. In particular, the shift assist projections 20 are mounted adjacent the first up shift teeth 55 with the second and third up shift teeth 57 and 59 arranged rotationally behind each first up shift teeth 55 in consecutive order, as explained below. However, each of the teeth 54, 55, 57 and 59 can be considered second teeth of the second sprocket S₂. All of the second teeth (i.e., the teeth 54, 55, 57 and 59) extend radially outwardly from the annular ring portion 52 in a circumferentially spaced arrangement as best understood from Figures 2 and 3.

The second mounting portion 50 includes a plurality (five) of mounting flanges 56 that extend radially inwardly from the annular ring portion 52 for coupling the flanges 56 to the fastening elements 36 via the fasteners 38 in a conventional manner. Preferably, the second mounting portion 50, the second annular ring portion 52 and all of the second teeth (i.e. the teeth 54, 55, 57 and 59) are all integrally formed together as a one-piece, unitary member from a lightweight, rigid material such as aluminum or the like. On the other hand, the shift assist projections 20 are preferably formed as separate members that are fixedly coupled to the sprocket S₂. In the illustrated embodiment, the sprocket S₂ is preferably provided a plurality of axial through holes or openings 58 corresponding to the number of shift assist projections 20. The shift assist projections 20 are preferably partially received in the through holes 58 and then deformed in a manner similar to riveting to be fixedly retained in the through holes 58 of the sprocket S₂.

The annular ring portion 52 basically includes a first annular side surface 60 facing in a first axial direction toward the sprocket S₁ and a second annular side surface 62 facing in a second axial direction away from the sprocket S₁. In other words, the first and second annular side surfaces 60 and 62 face in opposite directions away from each other. A center plane P of the sprocket S₂ is equally spaced from and substantially parallel to the first and second side surfaces 60 and 62. The center plane P of the sprocket S₂ is substantially perpendicular to the center rotation axis X. The second teeth (i.e., the teeth 54, 55, 57 and 59) are preferably arranged between the first and second side surfaces 60 and 62.

Referring to Figures 2-15, the teeth 54, 55, 57 and 59 of the second sprocket S₂ will now be explained in more detail. Preferably, the first, second and third up shift teeth 55, 57 and 59 are arranged to form six up shift paths for the chain C when the crank set 12 is being rotated in the forward rotational direction R. In particular, the first, second and third up shift teeth 55, 57 and 59 are arranged in consecutive order in six locations around the circumference of the sprocket S₂ (i.e. in six groups of three). In other words, each up shift path is formed by one of the shift assist projections 20, one of the first up shift teeth 55, one of the second up shift teeth 57 and one of the third up shift teeth 59. More specifically, the first up shift teeth 55 are arranged adjacent the shift assist projections 20, the second up shift teeth 57 are arranged adjacent the first up shift teeth 55 on the rearward rotational side thereof, and the third up shift teeth 59 are arranged adjacent the second up shift teeth 57 on the rearward rotational side thereof.

Preferably, the shift assist projections 20 and the up shift teeth 55, 57 and 59 are circumferentially arranged to form three pairs of up shift paths. The up shift paths of each pair of up shift paths are preferably spaced an odd number of teeth (i.e. three teeth) from each other such that at least three functional up shift paths are formed. In particular, depending on the orientation of the chain C on the sprocket S₁, only three of the six up shift paths are utilized because the shift assist projections 20 are sized and configured to fit between an adjacent pair of outer link plates of the chain C, as explained below. The three pairs of up shift paths are preferably substantially equally spaced about the circumference of the sprocket S₂ such that three substantially equally spaced up shift paths are formed, regardless of the orientation of the chain C on the sprocket S₁. The main teeth 54 are arranged between the groups of up shift teeth 55, 57 and 59. In the illustrated embodiment, the sprocket S₂ has a total of fifty-two teeth. Thus, the sprocket S₂ preferably has thirty-four main teeth 54. The main teeth 54 are conventional straight teeth.

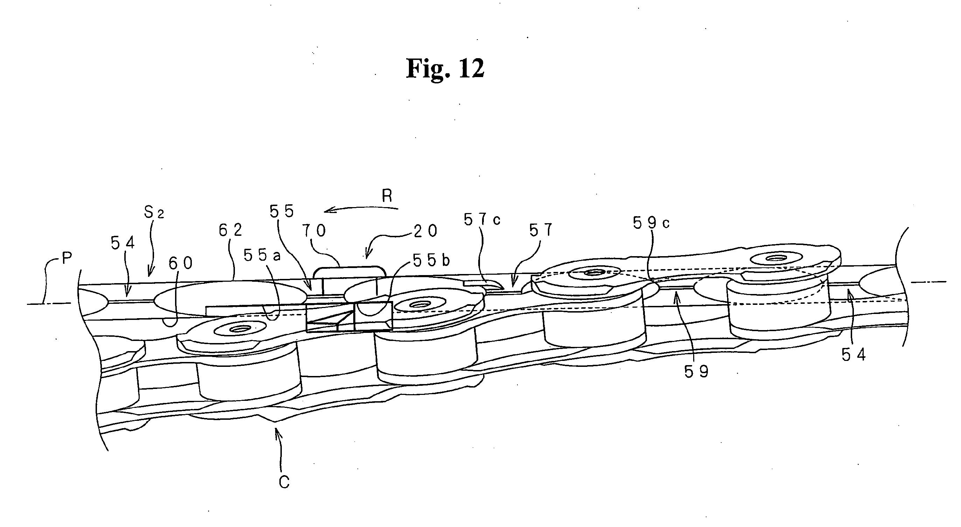

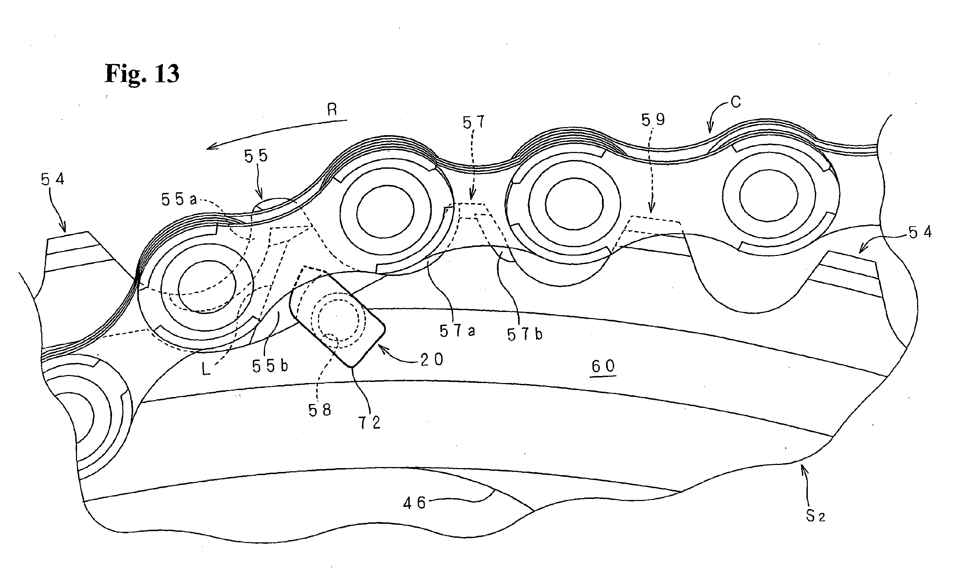

The first up shift teeth 55 are identical to each other. Accordingly, only one of the first up shift teeth 55 will be discussed and illustrated in detail herein. Each first up shift tooth 55 has a conventional shape (i.e., similar to the main teeth 54), except that each first up shift tooth includes a first leading cutout 55a and a recessed side surface 55b, both formed on the first side thereof as best seen in Figures 12-15. The first leading cutout 55a and the recessed side surface 55b are sized and configured to permit the outer link of the chain C to be received therein so that the outer link plate of the chain C is caught and twisted by the shift assist projection 20 during an up shift. The leading edge of the recessed side surface 55b forms a chamfer line L with the first (flat) side surface 60. During the initial stage of an up shift, an outer link of the chain C is twisted along the chamfer line L, as best seen in Figures 12 and 13. With this arrangement, the following outer link of the chain C is angled more than when a conventional shift assist protrusion is utilized.

In other words, the recessed side surface 55b is angled inwardly towards the center plane P of the sprocket S₂ as the recessed side surface 55b extends from the chamfer line L. Thus, the recessed side surface 55b is preferably chamfered in the circumferential direction, and has a rearward most edge located closer to the center plane P than a forward most rotational edge as viewed substantially along a chain moving direction of the chain when the chain C is being shifted from the smaller sprocket S₁ to the larger sprocket S₂.

The second up shift teeth 57 are identical to each other. Accordingly, only one of the second up shift teeth 57 will be discussed and illustrated in detail herein. Each second up shift tooth 57 has a conventional shape (i.e., similar to the main teeth 54), except that each second up shift tooth includes a second leading cutout 57a and a second trailing cutout 57b, both formed on the first side thereof, and a second opposing leading recess 57c formed in the second side thereof. Each of the cutouts/recess 57a, 57b and 57c preferably includes a flat surface that is parallel to the center plane P.

The third up shift teeth 59 are identical to each other. Accordingly, only one of the third up shift teeth 59 will be discussed and illustrated in detail herein. Each third up shift tooth 59 has a conventional shape (i.e., similar to the main teeth 54), except that each third up shift tooth includes a third opposing leading recess 59c formed in the second side thereof. The third opposing recess 59c is similar to the second opposing recess 57c, except the third opposing recess 59c is slightly smaller than the second opposing recess 57c. Thus, the third opposing recess 59c will not be discussed or illustrated in detail herein.

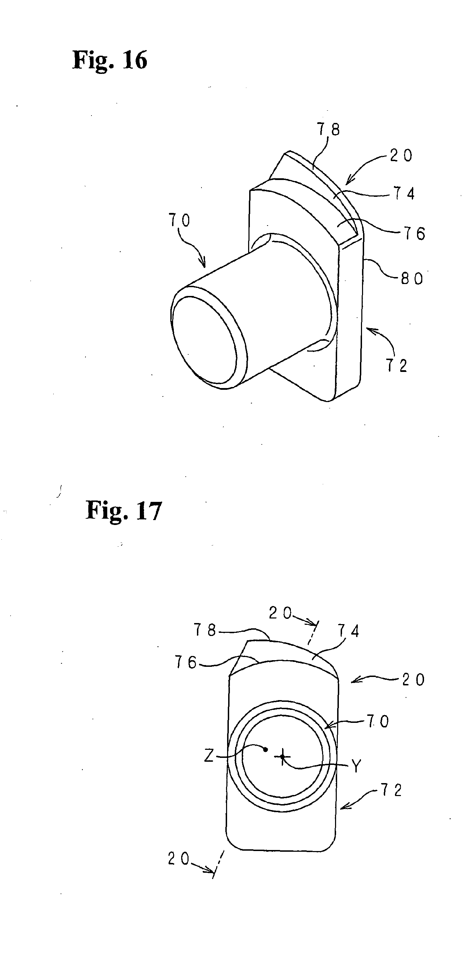

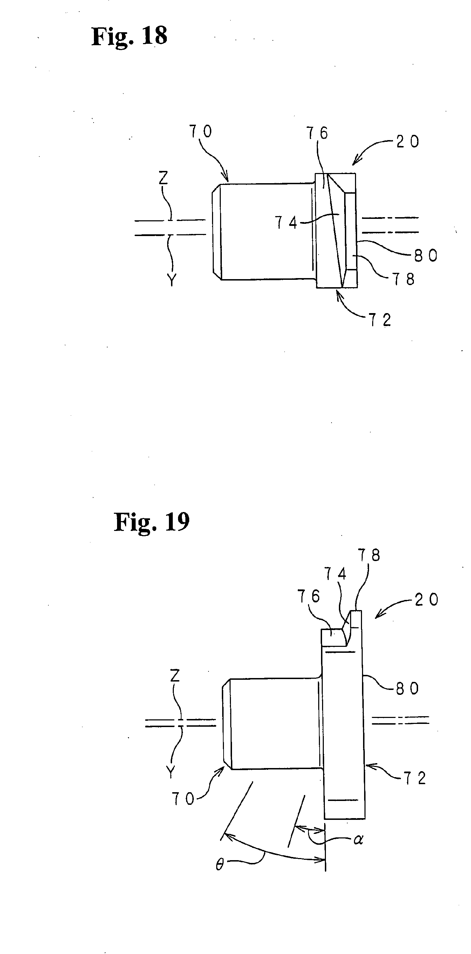

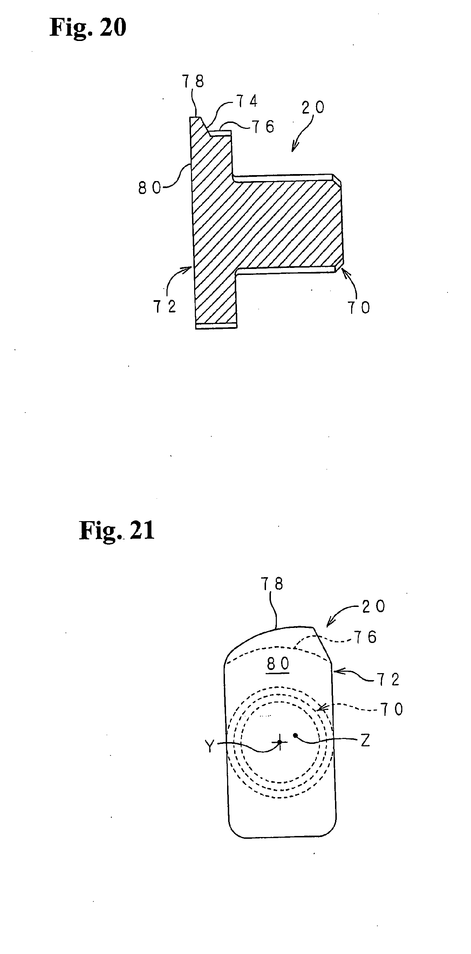

Referring mainly to Figures 16-21, the shift assist projections 20 will now be explained in more detail. The shift assist projections 20 are identical to each other. Thus, only one of the shift assist projections 20 will be discussed and illustrated in detail herein. Each shift assist projection 20 basically includes a mounting portion 70 and a shift assist portion 72. The mounting portion 70 is fixedly coupled to the sprocket S₂. The shift assist portion 72 is fixedly coupled with the mounting portion 70. Preferably, the mounting portion 70 and the shift assist portion 72 are integrally formed together as a one-piece unitary member from a lightweight, rigid material such as aluminum or the like.

The mounting portion 70 is a cylindrical shaped portion with a center axis Y that is substantially parallel to the rotation axis X when the shift assist projection 20 is coupled to the sprocket S₂. In particular, the mounting portion 70 is received in one of axial through holes 58, and then the tip of the cylindrical mounting portion is deformed in a manner similar to riveting to secure the mounting portion within the through hole 58, as best seen in Figure 12.

The shift assist portion 72 has a substantially rectangular shape with a curved, tooth shaped end as viewed along the center axis Y of the mounting portion 70. The shift assist portion 72includes an axially facing chain catching surface 74, a chain support surface 76 extending axially from the chain catching surface 74, a free edge 78 defining the outermost shape of the tooth shaped end, and an inside end surface 80 that faces the sprocket S₁. The chain catching surface 74 faces the center plane P and the tooth 55. The chain support surface 76 is a cylindrical surface that is preferably parallel to the center axis Y. Similarly, the edge surface 78 is also preferably a substantially cylindrical surface that is substantially parallel to the center axis Y. The inside end surface 80 is preferably a planar surface that is substantially perpendicular to the center axis Y.

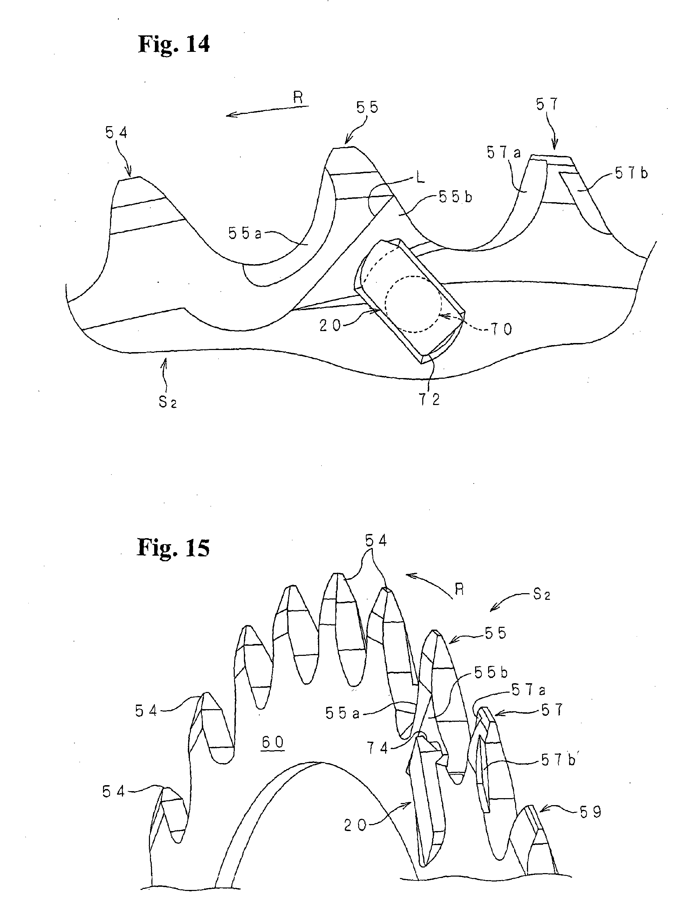

The chain catching surface 74 has a frustaconical shape that is part of a cone having a center axis X (i.e., extending around the center axis or line Z). As seen in Figures 17-19, the center axis or line Z is offset from the center axis Y of the mounting portion 70 such that the chain catching surface 74 is angled a varying amount relative to the center plane P of the sprocket S₂. The shift assist portion72 is preferably at least partially received in a recess (not shown in detail) of the sprocket S₂ to prevent relative rotation of the shift assist projection 20, as best seen in Figures 14 and 15. However, the shift assist portion 72 is preferably axially spaced from the center plane P.

In particular, a leading (forward most) rotational edge of the chain catching surface 74 preferably forms an angle α of about 12° relative to the center plane P, while a trailing (rearward most) rotational edge of the chain catching surface preferably forms an angle θ of about 30° relative to the center plane P. In any case, the angle α is preferably closer to 0° than 45° relative to the center plane P, while the angle θ is preferably closer to 45° than 0° relative to the center plane P. Due to this configuration, the trailing rotational edge of the chain catching surface 74 is preferably located closer to the center plane P than the leading rotational edge of the chain catching surface 74. This varying angle of the chain catching surface 74 twists an outer link plate of the chain C aggressively during the initial stage of an up shift.

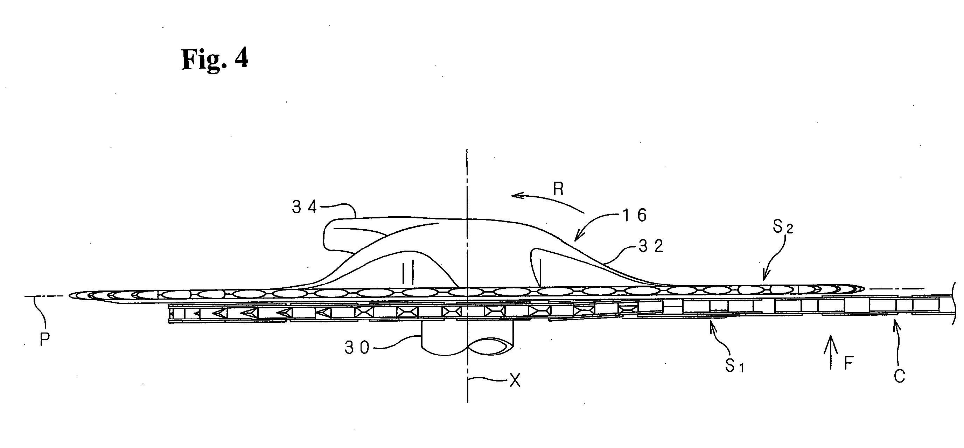

Preferably, these angles α and θ, and the spacing of the leading/trailing edges of the chain catching surface 74 are measured as viewed substantially along a chain moving direction of the chain C when the chain C is being shifted from the smaller sprocket S₁ to the larger sprocket S₂. In other words, the chain moving direction is the substantially longitudinal direction of the moving chain C where the chain C is being shifted, i.e. along the length of chain C (e.g. substantially parallel to the center plane P) as best understood from Figures 4-7. In other words, the chain catching surface 74 is preferably chamfered in the circumferential direction such that the chain catching surface 74 is substantially parallel to the recessed side surface 55b.

Operation of the present invention will now be discussed in more detail. Basically, when a lateral force F is applied to the chain C, an up shift of the chain C from the sprocket S₁ to the sprocket S₂ is initiated. Depending on the orientation of the chain C on the sprocket S₁, the first shift assist projection 20 that is located in the rearward rotational direction will either pass between a pair of adjacent outer link plates of the chain or engage the center area of one of the outer link plates to initiate an up shift as explained above. If the first shift assist projection passes between adjacent outer link plates of the chain C, the next shift assist projection 20 will preferably engage the center area of one of the outer link plates to initiate an up shift. However, if this shift assist projection 20 also passes between a pair of adjacent outer link plates of the chain C, the next shift assist projection 20 will definitely engage the middle area of one of the outer link plates of the chain due to the odd number of teeth between pairs of adjacent shift assist projections 20. Usually, only one shift assist projection 20 will potentially pass between a pair of adjacent outer link plates, and the next shift assist projection 20 will initiate an up shift of the chain C. However, in some case, the first shift assist projection 20 encountered by the chain C will be in the proper orientation to initiate an up shift. In any case, regardless of the orientation of the chain C on the sprocket S₁, one of the shift assist projections will engage the center area of one of the outer link plates to initiate an up shift in less than 180° of rotation of the crank arms 14 and 16.

As used herein, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

### SECOND EMBODIMENT

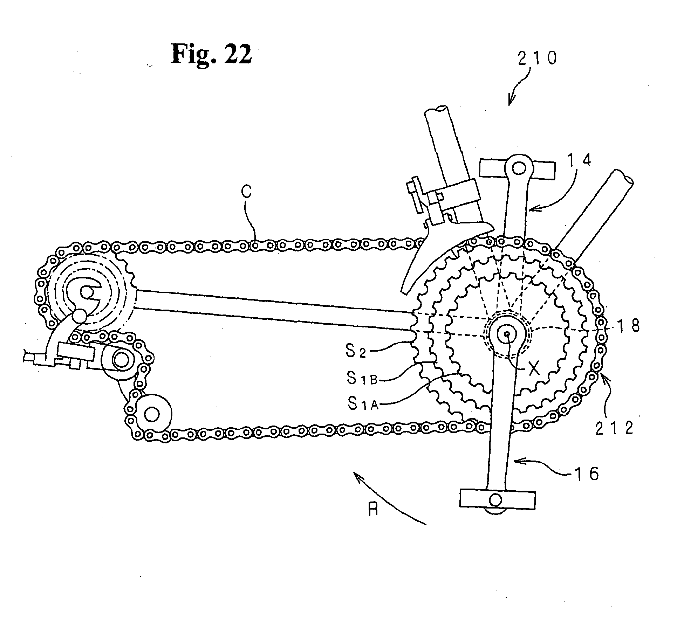

Referring now to Figure 22, a bicycle drive train 210 with a front crank set 212 in accordance with a second embodiment will now be explained. This second embodiment is identical to the first embodiment, except the sprocket S₁ of the first embodiment has been replaced with a pair of sprockets S_{1A} and S_{1B}. In view of the similarities between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

In this embodiment, the large sprocket S₂ and the intermediate sprocket S_{1B} are both provided with shift assist projections (not shown) such as in the first embodiment. The intermediate sprocket S_{1B} is identical to the small sprocket S₁ of the first embodiment, except that the intermediate sprocket S_{1B} has a plurality of projections (not shown) and up shift teeth (not shown) similar to the large sprocket S₂. The smallest sprocket S_{1A} is substantially identical to sprocket S₁ of the first embodiment, except that sprocket S_{1A} has a smaller diameter (i.e., fewer teeth) than the sprocket S₁ of the first embodiment.

The terms of degree such as "substantially", "about" and "approximately" as used herein mean a reasonable amount of deviation of the modified term such that the end result is not significantly changed. These terms should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A shift assist projection (20) for a bicycle sprocket (S₂) comprising:
a mounting portion (70) configured and arranged to be fixedly coupled to the bicycle sprocket (S₂) that has a plurality of chain engagement teeth (44, 54), a center plane (P) and a center rotation axis (X) perpendicular to the center plane;
a shift assist portion (72) configured to be axially spaced from the center plane of the bicycle sprocket when the mounting portion (70) is fixedly coupled to the bicycle sprocket (S₂),
the shift assist portion (72) having an axially facing chain catching surface (74) that faces the center plane (P) and the teeth (54, 55, 57, 59) to engage an outer link plate of a bicycle chain (6) when the mounting portion (70) is fixedly coupled to the bicycle sprocket (S₂),
the chain catching surface (74) being angled a varying amount relative to the center plane (P) of the bicycle sprocket (S₂) when the mounting portion (70) is fixedly coupled to the bicycle sprocket (S₂).

2. The shift assist projection (20) according to claim 1, wherein
the chain catching surface (74) has a forward most rotational edge that is angled closer to 0° than 45° relative to the center plane (P) when the mounting portion (70) is fixedly coupled to the bicycle sprocket (S₂) as viewed substantially along a chain moving direction of the chain (C) when the chain is being shifted from a smaller sprocket (S₁) to the sprocket (S₂) with the shift assist projection (20) coupled thereto, and
the chain catching surface (74) has a rearward most rotational edge that is angled closer to 45° than 0° relative to the center plane (P) when the mounting portion (70) is fixedly coupled to the bicycle sprocket (S₂) as viewed substantially along the chain moving direction of the chain (C) when the chain is being shifted from the smaller sprocket (S₁) to the sprocket (S₂) with the shift assist projection (20) coupled thereto.

3. The shift assist projection (20) according to claim 2, wherein
the forward most rotational edge is angled about 12° relative to the center plane (P) when the mounting portion (70) is fixedly coupled to the bicycle sprocket (S₂) and the rearward most rotational edge is angled about 30° relative to the center plane (P) when the mounting portion (70) is fixedly coupled to the bicycle sprocket (S₂).

4. The shift assist projection (20) according to claim 1, wherein
the chain catching surface (74) has a frustaconical shape.

5. The shift assist projection (20) according to claim 1, wherein
the shift assist portion (72) includes a chain support surface (76) extending axially toward the center plane (P) from the chain catching surface (74) when the mounting portion (70) is fixedly coupled to the bicycle sprocket (S₂).

6. The shift assist projection (20) according to claim 1, wherein
the mounting portion (70) and the shift assist portion (72) are integrally formed together as a one-piece, unitary member.

7. The shift assist projection (20) according to claim 1, wherein
the mounting portion (70) includes a cylindrical shaped section configured to be fixedly mounted within a corresponding axial opening of the bicycle sprocket (S₂).

8. The shift assist projection (20) according to claim 7, wherein
the chain catching surface (74) has a frustaconical shape extending around a center line that is offset from a central axis (Y) of the cylindrical shaped section of the mounting portion (70).

9. The shift assist projection (20) according to claim 1, wherein
the shift assist portion (72) is dimensioned so as to fit between an adjacent pair of outer link plates of the chain (C) when the mounting portion (70) is fixedly coupled to the bicycle sprocket (S₂) and when the chain (C) is being shifted onto the sprocket (S₂) from a smaller sprocket (S₁).

10. A shift assist projection (20) for a bicycle sprocket (S_{1B}, S₂) comprising:
a mounting portion (70) configured and arranged to be fixedly coupled to a bicycle sprocket (S_{1B}, S₂) that has a plurality of chain engagement teeth (44, 54, 55, 57, 59), a center plane (P) and a center rotation axis (X) perpendicular to the center plane;
a shift assist portion (72) configured to be axially spaced from the center plane (P) of the bicycle sprocket (S_{1B}, S₂) when the mounting portion (70) is fixedly coupled to the bicycle sprocket (S_{1B}, S₂),
the shift assist portion (72) having an axially facing chain catching surface (74) that faces the center plane (P) and the teeth (44; 54, 55, 57, 59) to engage an outer link plate of a bicycle chain (C) when the mounting portion (70) is fixedly coupled to the bicycle sprocket (S_{1B}, S₂),
the chain catching surface (74) being angled a varying amount relative to the center plane (P) of the bicycle sprocket (S_{1B}, S₂) when the mounting portion (70) is fixedly coupled to the bicycle sprocket (S_{1B}, S₂),
the chain catching surface (74) having a rearward most rotational edge that is located closer to the center plane (P) than a forward most rotational edge as viewed substantially along a chain moving direction of the chain (C) when the chain is being shifted from a smaller sprocket (S₁) to the sprocket (S_{1B}, S₂) with the shift assist projection (20) coupled thereto.

11. A large bicycle sprocket (S₂) comprising:
an annular ring portion (52) configured to be coupled to a bicycle drive train element, the annular ring portion (52) having a first annular side surface (60) facing in a first direction, a second annular side surface facing (62) in a second direction substantially opposite to the first direction and a center plane (P) arranged between the first and second annular side surfaces (60; 62);
a plurality of circumferentially arranged teeth (54, 55, 57, 59) extending radially outwardly from the annular ring portion (52) between the first and second annular side surfaces (60; 62) of the annular ring portion (52); and
a shift assist projection (20) extending axially in one of the first and second directions from the sprocket (S₂), the shift assist projection (20) having an axially facing chain catching surface (74) that faces the center plane (P) and
the teeth (54, 55, 57, 59) to engage an outer link plate of a bicycle chain (C), the chain catching surface (74) being angled a varying amount relative to the center plane (P).

12. The bicycle sprocket (S₂) according to claim 11, wherein
the chain catching surface (74) has a forward most rotational edge that is angled closer to 0° than 45° relative to the center plane as viewed substantially along a chain moving direction of the chain (C) when the chain is being shifted from a smaller sprocket (S₁) to the large sprocket (S₂), and
the chain catching surface (74) has a rearward most rotational edge that is angled closer to 45° than 0° relative to the center plane (P) as viewed substantially along the chain moving direction of the chain (C) when the chain is being shifted from the smaller sprocket (S₁) to the larger sprocket (S₂).

13. The bicycle sprocket (S₂) according to claim 12, wherein
the forward most rotational edge is angled about 12° relative to the center plane (P) and the rearward most rotational edge is angled about 30° relative to the center plane (P).

14. The bicycle sprocket (S₂) according to claim 12, wherein
the shift assist projection (20) is arranged substantially adjacent one of the teeth (54, 55, 57, 59), the one of the teeth having an axially facing recessed side surface (55b) that faces the axially facing chain catching surface (74).

15. The bicycle sprocket (S₂) according to claim 11, wherein
the chain catching surface (74) has a frustaconical shape.

16. The bicycle sprocket (S₂) according to claim 11, wherein
the shift assist projection (20) includes a chain support surface (76) extending axially toward the center plane (P) from the chain catching surface (74).

17. The bicycle sprocket (S₂) according to claim 11, wherein
the annular ring portion (52) and the circumferentially arranged teeth (54, 55, 57, 59) are integrally formed together as a one-piece, unitary member.

18. The bicycle sprocket (S₂) according to claim 17, wherein
the shift assist projection (20) is formed as a separate member from the annular ring portion (52) and the circumferentially arranged teeth (54, 55, 57, 59).

19. The bicycle sprocket (S₂) according to claim 11, wherein
the shift assist projection (20) includes a mounting portion (70) with a cylindrical shaped section configured to be fixedly mounted within a corresponding axial opening of the bicycle sprocket (S₂).

20. The bicycle sprocket (S₂) according to claim 19, wherein
the chain catching surface (74) has a frustaconical shape extending around a center line that is offset from a central axis (Y) of the cylindrical shaped section of the mounting portion.

21. The bicycle sprocket (S₂) according to claim 11, wherein
the shift assist portion (72) is dimensioned so as to fit between an adjacent pair of outer link plates of the chain (C) when the chain is being shifted onto the sprocket (S₂) from a smaller sprocket (S₁).

22. The bicycle sprocket (S₂) according to claim 11, wherein
the bicycle sprocket (S₂) includes a plurality of the shift assist projections (20) arranged in a circumferentially spaced manner.

23. The bicycle sprocket (S₂) according to claim 11, wherein
the shift assist projection (20) is arranged substantially adjacent one of the teeth (54, 55, 57, 59), the one of the teeth (55) having an axially facing recessed side surface (55b) that faces the axially facing chain catching surface (74).

24. The bicycle sprocket (S₂) according to claim 23, wherein
the recessed side surface (55b) is chamfered in the circumferential direction.

25. The bicycle sprocket (S₂) according to claim 24, wherein
the chamfered recessed side surface (55b) has a rearward most edge located closer to the center plane (P) than a forward most rotational edge as viewed substantially along a chain moving direction of the chain (C) when the chain is being shifted from a smaller sprocket (S₁) to the large sprocket (S₂).

26. The bicycle sprocket (S₂) according to claim 25, wherein
the chain catching surface (74) is chamfered in the circumferential direction such that the chain catching surface (74) is substantially parallel to the recessed side surface.

27. A large bicycle sprocket (S₂) comprising:
an annular ring portion (52) configured to be coupled to a bicycle drive train element, the annular ring portion (52) having a first annular side surface (60) facing in a first direction, a second annular side surface (62) facing in a second direction substantially opposite to the first direction and a center plane (P) arranged between the first and second annular side surfaces (60; 62);
a plurality of circumferentially arranged teeth (54, 55, 57, 59) extending radially outwardly from the annular ring portion (52) between the first and second annular side surfaces (60; 62) of the annular ring portion (52); and
a shift assist projection (20) extending axially in one of the first and second directions from the sprocket (S₂), the shift assist projection (20) having an axially facing chain catching surface (74) that faces the center plane (P) and the teeth (54, 55, 57, 59) to engage an outer link plate of a bicycle chain (C), the chain catching surface (74) being angled a varying amount relative to the center plane (P), the chain catching surface (74) having a rearward most rotational edge that is located closer to the center plane (P) than a forward most rotational edge as viewed substantially along a chain moving direction of the chain (C) when the chain is being shifted from a smaller sprocket (S₁) to the large sprocket (S₂).

28. A bicycle sprocket assembly comprising:
a first sprocket (S₁) having a plurality of circumferentially spaced first teeth (44) extending radially outwardly from a first annular ring portion (42);
a second sprocket (S₂) coupled to the first sprocket (S₁) that is larger than the first sprocket (S₁), the second sprocket (S₂) including
a second annular ring portion (52) having a first annular side surface (60) facing in a first direction toward the first sprocket (S₁), a second annular side surface (62) facing in a second direction substantially opposite to the first direction and a center plane (P) arranged between the first and second annular side surfaces (60; 62),
a plurality of circumferentially arranged second teeth (54, 55, 57, 59) extending radially outwardly from the second annular ring portion (52) between the first and second annular side surfaces (60; 62) of the second annular ring portion (52), and
a shift assist projection (20) extending axially from the second sprocket (S2) toward the first sprocket (S₁), the shift assist projection (20) having an axially facing chain catching surface (74) that faces the center plane (P) and the second teeth (54, 55, 57, 59) to engage an outer link plate of a bicycle chain (C),
the chain catching surface (74) being angled a varying amount relative to the center plane (P).

29. The bicycle sprocket assembly according to claim 28, further comprising:
a bicycle crank arm (16) fixedly coupled with the first and second sprockets (S₁, S₂).
